# EUROPEAN PATENT APPLICATION

(11) **EP 4 614 638 A2**
(43) Date of publication of application: **10.09.2025**
(21) Application number: 25150214.2
(22) Date of filing: 03.01.2025
(51) Int. Cl.: H01M 10/04, H01M 10/0587, H01M 50/533, H01M 50/538

(54) **SECONDARY BATTERY**

(30) Priority: 08.03.2024 KR 20240032978
(71) Applicant: SAMSUNG SDI CO., LTD., Yongin-si, Gyeonggi-do 17084 (KR)
(72) Inventor: Park, Jung Hyun, 17084 Yongin-si, Gyeonggi-do (KR); Kim, Joung Ku, 17084 Yongin-si, Gyeonggi-do (KR); Kim, Kyoung Tae, 17084 Yongin-si, Gyeonggi-do (KR); Kim, Jung Hyun, 17084 Yongin-si, Gyeonggi-do (KR); Park, Yeon Jin, 17084 Yongin-si, Gyeonggi-do (KR); Lee, Jung Su, 17084 Yongin-si, Gyeonggi-do (KR); Kim, So Yeon, 17084 Yongin-si, Gyeonggi-do (KR); Jung, Hyun Ki, 17084 Yongin-si, Gyeonggi-do (KR)
(74) Representative: Gulde & Partner

(57) **Abstract**

A secondary battery (100) is provided in which a front end area (1218) of a base material and a rear end area (1219) of the base material (1211) of an electrode assembly (120) have different heights from each other to prevent a base material area (1213) from drooping when it is compacted or bent. A secondary battery (100) includes a case (110) and an electrode assembly (120) including a first electrode plate (121) and a second electrode plate (122) accommodated in the case (110). The first electrode plate (121) includes a base material (1211), an active material coating area (1212) coated with an active material on the base material (1211), an exposed base material area (1213) that is not coated with the active material, a winding front end (1216) at which winding of the first electrode plate (121) starts, and a winding rear end (1217) at which the winding of the first electrode plate (121) ends. A height (h1) of a base material front end area (1218) at which the winding of the exposed base material area (1213) starts is different from a height (h2) of a base material rear end area (1219) at which the winding ens.

## Description

### BACKGROUND

### 1. Field

Embodiments relate to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes

One or more embodiments of the present disclosure provide a secondary battery in which a front end area of a base material and a rear end area of the base material of an electrode assembly have heights that are different from each other to prevent a base material area from drooping if it is compacted or bent.

Other aspects of some embodiments of the present disclosure provide a secondary battery in which a front end area or a rear end area of an electrode assembly has a height less than that of a base material area to prevent the base material area from drooping if it is compacted or bent.

Other aspects of some embodiments of the present disclosure provide a secondary battery in which a rear end area of a base material of an electrode assembly has a height less than that of a base material area so that an insulating member is easily coupled to the electrode assembly.

These and other aspects and features of the present disclosure will be described in or will be apparent from the following description of embodiments of the present disclosure.

According to one or more embodiments, a secondary battery includes: a case; and an electrode assembly including a first electrode plate and a second electrode plate and accommodated in the case, wherein the first electrode plate includes a base material having a height direction from a first side of the base material to a second side of the base material, an active material coating area coated with an active material on the base material, an exposed base material area that is not coated with the active material, a winding front end at which winding of the first electrode plate starts, and a winding rear end at which the winding of the first electrode plate ends, wherein a height in the height direction of a base material front end area at which the winding of the exposed base material area starts is different from a height in the height direction of a base material rear end area at which the winding ends. In other words, the first electrode plate includes a base material having a portion coated with the active material on the base material, referred to as coated base material area, and having another portion not coated with the active material on the base material, referred to an exposed base material area, or in other words, non-coated or coating-free. The base material area may be defined as an area of the first base material that is not coated with the active material and is exposed or protrudes to the outside (e.g., an upper side). Furthermore, the first electrode plate includes the winding front end, which is configured in such a way that the winding of the first electrode plate can start there, and the winding rear end, which is configured in such a way that the winding of the first electrode plate can finish there.

According to one or more embodiments, the height of the base material front end area may be greater than the height of the base material rear end area.

According to one or more embodiments, the height of the base material front end area may be less than the height of the base material end area.

According to one or more embodiments, the base material front end area may include an area of about 12 turns to about 22 turns from the winding front end.

According to one or more embodiments, the base material front end area may include an area of about 14 turns to about 22 turns from the winding front end.

According to one or more embodiments, the base material front end area may include an area of about 16 turns to about 22 turns from the winding front end.

According to one or more embodiments, the base material rear end area may include an area of about 1 turn to about 4 turns from the winding rear end.

According to one or more embodiments, the base material rear end area may include an area of about 2 turn to about 4 turns from the winding rear end.

According to one or more embodiments, the base material rear end area may include an area of about 3 turn to about 4 turns from the winding rear end.

According to one or more embodiments, the base material area may further include at least one base material tab disposed between the base material front end area and the base material rear end area, wherein each of the height of the base material front end area and the height of the base material rear end area may be less than a height of the at least one base material tab.

According to one or more embodiments, the height of the base material front end area may be about 1% to about 80% of the height of the at least one base material tab.

According to one or more embodiments, the height of the base material front end area may be about 1% to about 50% of the height of the at least one base material tab.

According to one or more embodiments, the height of the base material front end area may be about 1% to about 20% of the height of the at least one base material tab.

According to one or more embodiments, the height of the base material front end area may be about 5% to about 17% of the height of the at least one base material tab.

According to one or more embodiments, the height of the base material front end area may be about 8% to about 14% of the height of the at least one base material tab.

According to one or more embodiments, the height of the base material rear end area may be about 1% to about 50% of the height of the at least one base material tab.

According to one or more embodiments, the height of the base material rear end area may be about 10% to about 40% of the height of the at least one base material tab.

According to one or more embodiments, the height of the base material rear end area may be about 20% to about 35% of the height of the at least one base material tab.

According to one or more embodiments, the base material tab may be bent toward a core or away from the core of the electrode assembly.

According to one or more embodiments, the base material tab may include a plurality of slits provided in a height direction of the base material tab.

According to one or more embodiments, the secondary battery may further include a current collector plate welded to the at least one base material tab, wherein a gap is provided between the base material front end area and/or the base material rear end area and the current collector plate.

An area of the base material area, which may optionally be welded to the first current collector, may be defined as a base material tab.

According to one or more embodiments, the secondary battery may further include a rivet terminal welded to the current collector plate and extending through the case.

According to one or more embodiments, the secondary battery may further include an insulating member configured to integrally wrap the current collector plate and upper and side portions of the electrode assembly.

According to one or more embodiments, the insulating member may include an opening through which the current collector plate is exposed.

According to one or more embodiments, the secondary battery may further include a cap plate configured to seal the case at a side of the case that is opposite to a side of the case at which of the rivet terminal is positioned.

According to one or more embodiments, the second electrode plate may include a second base material, a second active material coating area coated with an active material on the second base material, and a second exposed base material area that is not coated with the active material, with the second electrode plate being electrically connected to the case. In this case, the corresponding components of the first electrode plate each correspond to a first element set, for example the components of the first electrode plate are the first base material, the first active material coating area coated with the first active material on the first base material, the first exposed base material area that is not coated with the active material, the first base material tab and the first current collector plate.

According to one or more embodiments, the second electrode plate may include a second winding front end at which winding of the second electrode plate starts, and a second winding rear end at which the winding of the second electrode plate ends, wherein a height in the height direction of a second base material front end area at which the winding of the second exposed base material area starts is different from a height in the height direction of a second base material rear end area at which the winding ends.

According to one or more embodiments, a height in the height direction of a second base material front end area at which winding of the second exposed base material area starts is different from a height of a second base material rear end area at which the winding of the second exposed base material area ends.

According to one or more embodiments, the height of the second base material front end area may be greater than the height of the second base material rear end area.

According to one or more embodiments, the height of the second base material front end area may be less than the height of the second base material end area.

According to one or more embodiments, the second base material area may further include at least one second base material tab disposed between the second base material front end area and the second base material rear end area, wherein each of the height of the second base material front end area and the height of the second base material rear end area may be less than a height in the height direction of the at least one second base material tab.

According to one or more embodiments, the second base material front end area may include an area of about 12 turns to about 22 turns from the second winding front end.

According to one or more embodiments, the second base material front end area may include an area of about 14 turns to about 22 turns from the second winding front end.

According to one or more embodiments, the second base material front end area may include an area of about 16 turns to about 22 turns from the second winding front end.

According to one or more embodiments, the second base material rear end area may include an area of about 1 turn to about 4 turns from the second winding rear end.

According to one or more embodiments, the second base material rear end area may include an area of about 2 turn to about 4 turns from the second winding rear end.

According to one or more embodiments, the second base material rear end area may include an area of about 3 turn to about 4 turns from the second winding rear end.

According to one or more embodiments, the height of the second base material front end area may be about 1% to about 80% of the height of the at least one second base material tab.

According to one or more embodiments, the height of the second base material front end area may be about 1% to about 50% of the height of the at least one second base material tab.

According to one or more embodiments, the height of the second base material front end area may be about 1% to about 20% of the height of the at least one second base material tab.

According to one or more embodiments, the height of the second base material front end area may be about 5% to about 17% of the height of the at least one second base material tab.

According to one or more embodiments, the height of the second base material front end area may be about 8% to about 14% of the height of the at least one second base material tab.

According to one or more embodiments, the height of the second base material rear end area may be about 1% to about 50% of the height of the at least one second base material tab.

According to one or more embodiments, the height of the second base material rear end area may be about 10% to about 40% of the height of the at least one second base material tab.

According to one or more embodiments, the height of the second base material rear end area may be about 20% to about 35% of the height of the at least one second base material tab.

According to one or more embodiments, the second base material tab may be bent toward a core or away from the core of the electrode assembly.

According to one or more embodiments, the second base material tab may include a plurality of second slits provided in a height direction of the second base material tab.

According to one or more embodiments, the secondary battery may further include a second current collector plate welded to the at least one second base material tab, wherein a second gap is provided between the second base material front end area and/or the second base material rear end area and the second current collector plate.

An area of the second base material area, which may optionally be welded to the second current collector, may be defined as a second base material tab.

Herein, the height may refer to a height direction that extends from a first side to a second side of the respective electrode plate, with the height being the height in the respective exposed base material area part of the respective electrode plate.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIGS. 1A and 1B illustrate perspective and cross-sectional views of a cylindrical secondary battery according to one or more embodiments;
FIGS. 2A and 2B illustrate cross-sectional and enlarged cross-sectional views of a portion of an electrode assembly in the cylindrical secondary battery according to one or more embodiments;
FIG. 3 illustrates a plan view of an unfolded state of an electrode plate in the cylindrical secondary battery according to one or more embodiments;
FIG. 4 illustrates a perspective view of a portion of the electrode assembly, to which a current collector plate is welded, and an insulating member is coupled, in the cylindrical secondary battery according to one or more embodiments;
FIGS. 5A and 5B illustrate a perspective view of a battery pack including the cylindrical secondary battery according to one or more embodiments; and
FIGS. 6A and 6B illustrate perspective and side views of a vehicle including the battery pack according to one or more embodiments.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the present disclosure.

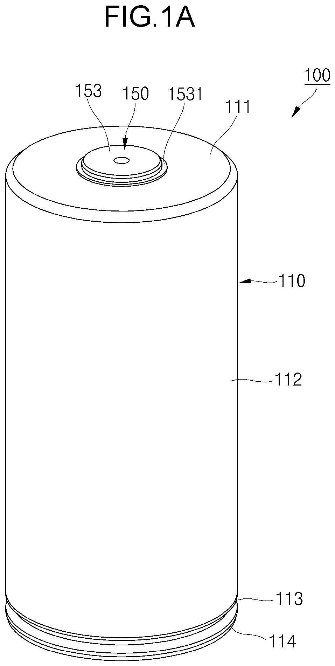

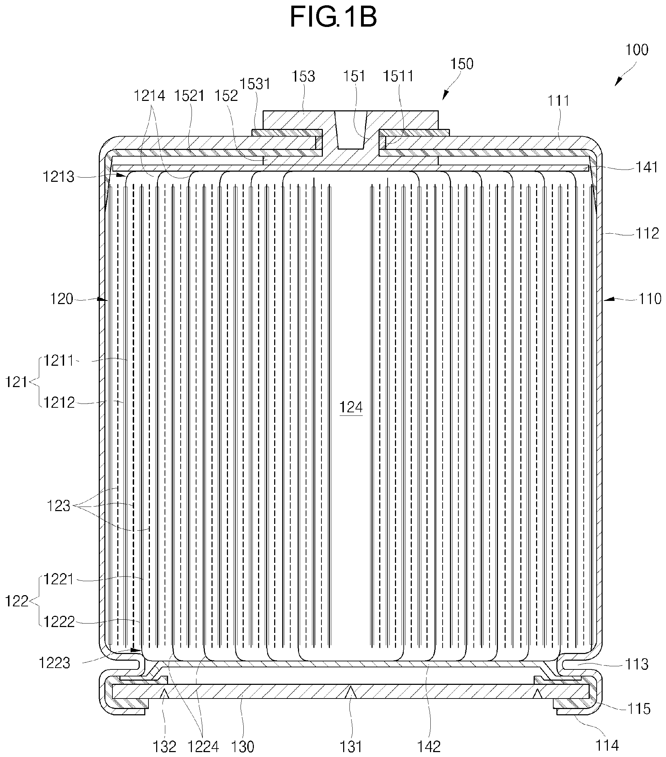

FIGS. 1A and 1B illustrate perspective and cross-sectional views of a cylindrical secondary battery according to one or more embodiments. As illustrated in FIGS. 1A and 1B, a secondary battery 100 according to embodiments may include a case 110 and an electrode assembly 120. In one or more embodiments, the secondary battery 100 according to embodiments may further include a cap plate 130, a first current collector plate 141, a second current collector plate 142, and a rivet terminal 150.

The case 110 may accommodate the electrode assembly 120 and an electrolyte (optional) and may define an outer appearance of the secondary battery 100 together with the cap plate 130. The case 110 may include a base part 111 having a substantially disk shape and a sidewall part 112 having a cylindrical shape and extending downward from the base part 111. The case 110 may include or be referred to as a can, an exterior, or a housing. In one or more embodiments, the case 110 may be provided in various shapes such as a pouch shape in addition to a circular shape. In some embodiments, the case 110 may include a metal such as steel, nickel-plated steel, a steel alloy, aluminum, an aluminum alloy, and a cold sheet metal (SPCE) for deep drawing, or a laminated film or plastic constituting the pouch. In one or more embodiments, the sidewall part 112 of the case 110 may include a beading part 113 that is recessed inward from an area between the electrode assembly 120 and the cap plate 130 and a crimping part 114 that is bent inward to cover the cap plate 130. The electrode assembly 120 may be stably fixed inside the case 110 by the base part 111 and the beading part 113 of the case 110. Thus, the cap plate 130 may be stably fixed by the crimping part 114.

The electrode assembly 120 may include a first electrode plate 121, a second electrode plate 122, and a separator 123 between the first electrode plate 121 and the second electrode plate 122. The electrode assembly 120 may be wound into a cylindrical or jelly-roll shape. In one or more embodiments, a hollow core 124 is formed in a longitudinal direction at a center of the electrode assembly 120. The electrode assembly 120 may include or be referred to as an electrode group, an electrode body, or an electrode. The electrode assembly 120 may be connected to an external device so the electrode assembly 120 can be charged or discharged. In one or more embodiments, a center pin (optional) may be provided in the core 124.

The first electrode plate 121 may include a first base material 1211 and a first active material coating area 1212 provided by applying a first active material on the base material 1211. In the first base material 1211, a first base material area 1213 that is not coated with the first active material may extend outward (for example, upward), and the first base material area 1213 may be electrically connected to the first current collector plate 141. The first base material area 1213 may be defined as an area of the first base material 1211 that is not coated with the active material and is exposed or protrudes to the outside (e.g., an upper side). In one or more embodiments, an area of the first base material area 1213, which is welded to the first current collector 141, may be defined as a first base material tab 1214.

The second electrode plate 122 may include a second base material 1221 and a second active material coating area 1222 provided by applying a second active material on the second base material 1221. In the second base materials 1221, a second base material area 1223 that is not coated with the second active material may extend outward (for example, downward), and the second base material area 1223 may be electrically connected to the second current collector plate 142. The second base material area 1223 may be defined as an area of the second base material 1221 that is not coated with the active material and is exposed or protrudes to the outside (e.g., a lower side). In one or more embodiments, an area of the second base material area 1223, which is welded to the second current collector plate 142, may be defined as a second base material tab 1224.

In one or more embodiments, the first base material area 1213 and the second base material area 1224 may extend in opposite directions. In one or more embodiments, the shape of the first base material area 1213 and the shape of the second base material area 1224 may be similar or the same, as will be described below.

The first electrode plate 121 may function as the positive electrode. In some embodiments, the first base material 1211 may be made of, for example, aluminum foil, and the first active material layer 1212 may include, for example, transition metal oxide. The second electrode plate 122 may function as the negative electrode. In some embodiments, the second base material 1221 may be made of, for example, copper foil or nickel foil, and the second active material layer 1222 may include, for example, graphite and/or silicon.

The separator 123 may prevent short circuit between the first electrode plate 121 and the second electrode plate 122 from occurring while allowing the movement of lithium ions. In one or more embodiments, the separator 123 may be disposed on both side surfaces of the first electrode plate 121 that are opposite to each other, or may be disposed on both side surfaces of the second electrode plate 122 that are opposite to each other.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<a<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The cap plate 130 may be coupled to a lower side of the case 110 to seal the case 110. The cap plate 130 may be provided in a substantially disk shape. In one or more embodiments, a circumference of the cap plate 130 may be coupled to the sidewall part 112 of the case 110 to seal the case 110. In one or more embodiments, the circumference of the cap plate 130 may be coupled to the beading part 113 and the crimping part 114 via an insulating gasket 115. The cap plate 130 may include or be referred to as a vent plate, a cover plate, or a seal plate. The cap plate 130 may be made of iron, nickel-plated iron, stainless steel, aluminum, or an aluminum alloy. If the secondary battery 100 is exposed to heat or is electrically short-circuited (e.g., internally short-circuited or externally short-circuited) so that an internal pressure is higher than a reference pressure, the cap plate 130 may be opened to reduce the internal pressure and release internal heat to outside of the secondary battery 100.

In one or more embodiments, the cap plate 130 may include a first breaking part 131 provided on a central area or an eccentric area and a second breaking part 132 provided around the first breaking part 131. In one or more embodiments, a breaking pressure of the first breaking part 131 and a breaking pressure of the second breaking part 132 may be different from each other. In one or more embodiments, a depth of the first breaking part 131 and a depth of the second breaking part 132 may be different from each other.

The first current collector plate 141 may be disposed between the electrode assembly 120 and the base part 111 of the case 110. The first current collector plate 141 may be provided in an approximately disk shape. In one or more embodiments, the first base material tab 1214 of the electrode assembly 120 may be electrically connected (e.g., laser welded) to a bottom surface of the first current collector plate 141. In one or more embodiments, a top surface of the first current collector plate 141 may be electrically connected (e.g., laser welded) to the rivet terminal 150. The first current collector plate 141 may include or be referred to as a current collector, a current collection member, or a conductor. The first current collector plate 141 may include aluminum, an aluminum alloy, steel, nickel-plated steel, or a steel alloy. The first current collector plate 141 may provide a current flow path between the electrode assembly 120 and the rivet terminal 150.

The second current collector plate 142 may be disposed between the electrode assembly 120 and the cap plate 130. The second collector plate 142 may be provided in an approximately circular plate shape. In one or more embodiments, the second base material tab 1224 of the electrode assembly 120 may be electrically connected (e.g., laser welded) to a top surface of the second current collector plate 142. In one or more embodiments, a circumference of the second current collector plate 142 may be electrically connected to a sidewall part 112 of the case 110. In one or more embodiments, the circumference of the second current collector plate 142 may be electrically connected to a lower side of the beading part 113. In one or more embodiments, the circumference of the second current collector plate 142 may be disposed between the lower side of the beading part 113 and the upper side of the insulating gasket 115. The second current collector plate 142 may include or be referred to as a current collector, a current collection member, or a conductor. The second current collector plate 142 may include copper, a copper alloy, steel, nickel-plated steel, a steel alloy, aluminum, or an aluminum alloy. The second current collector plate 142 may provide a current flow path between the electrode assembly 120 and the case 110.

The rivet terminal 150 may include a rivet body part 151, a rivet inner plate 152, and a rivet outer plate 153. The rivet body part 151 may be coupled by passing through the base part 111, and a sealing gasket 1511 may wrap a circumference of the rivet body part 151. The rivet inner plate 152 may be electrically connected (e.g., laser welded) to the first current collector plate 141, and an inner insulating member 1521 may be disposed between the rivet inner plate 152 and the base part 111. The rivet outer plate 153 may be disposed on the base part 111, and an outer insulation member 1531 may be disposed between the rivet outer plate 153 and the base 111. The rivet terminal 150 may include or be referred to as an external terminal or a battery terminal. The rivet terminal 150 may include aluminum, an aluminum alloy, copper, a copper alloy, nickel, or a nickel alloy. The rivet terminal 150 may serve as an external terminal (for example, a positive electrode terminal), and the base part 111 may also serve as an external terminal (for example, a negative electrode terminal).

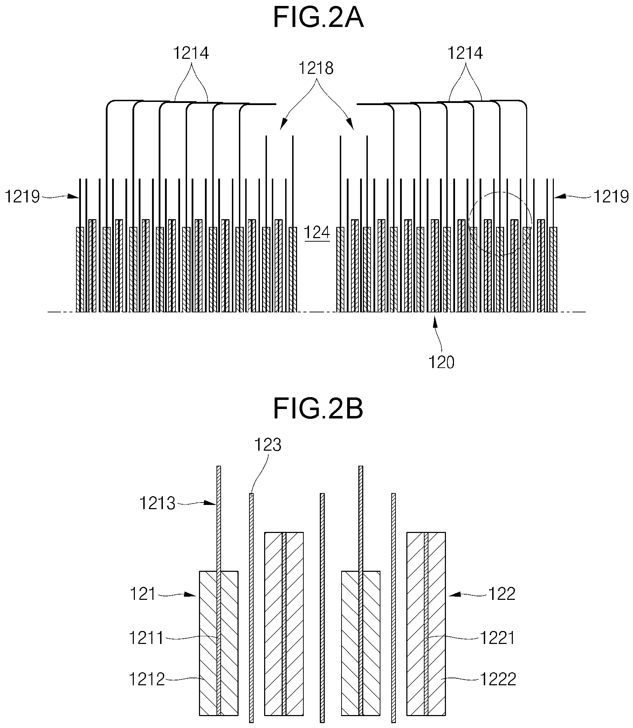

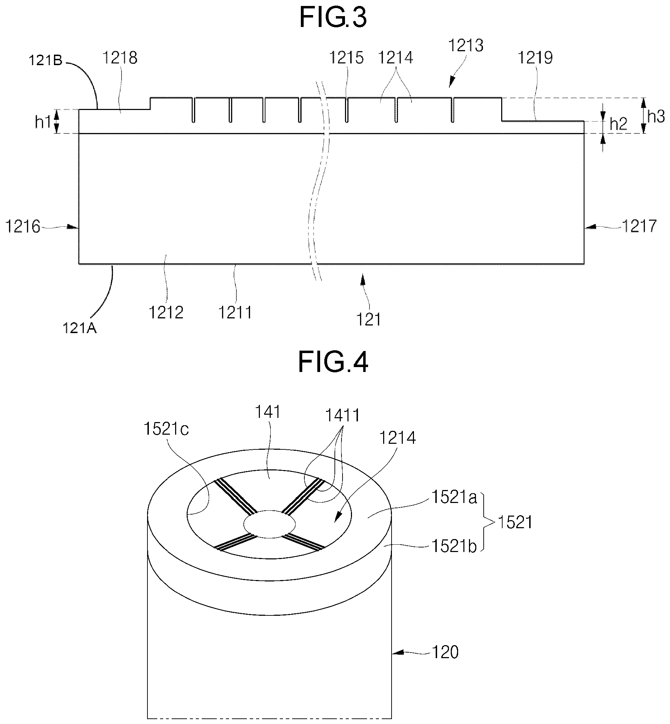

FIGS. 2A and 2B illustrate cross-sectional and enlarged cross-sectional views of a portion of the electrode assembly 120 in the cylindrical secondary battery 100 according to one or more embodiments, and FIG. 3 illustrates a plan view of an unfolded state of an first electrode plate 121 in the cylindrical secondary battery 100 according to one or more embodiments.

As described above, the first electrode plate 121 may include a base material 1211, an active material coating area 1212 provided by applying the active material on the base material 1211, and an exposed base material area 1213 that is exposed and not coated with the active material on the base material 1211.

In some embodiments, the first electrode plate 121 may include a winding front end 1216 at which winding of the first electrode plate 121 starts and a winding rear end 1217 at which the winding of the first electrode plate 121 is ended. In some embodiments, the winding front end 1216 may be a portion at which winding of the electrode assembly 120 starts, and the winding rear end 1217 may be a portion at which the winding of the electrode assembly 120 is ended or finished. In one or more embodiments, an area at which the winding starts on the exposed base material area 1213 of the first electrode plate 121 may be defined at the base material front end area 1218, and an area at which the winding is ended on the exposed base material area 1213 of the first electrode plate 121 may be defined at the base material rear end area 1219.

In one or more embodiments, a height h1, in a height direction, of the exposed base material area 1213 at the base material front end area 1218 may be different from a height h2, in the height direction, of the exposed base material area 1213 at the base material rear end area 1219. Herein, the height refers to a height direction that extends from a first side 121A to a second side 121B of the first electrode plate 121, with the height h1 being the height in the exposed base material area 1213 part of the electrode plate 121, as shown in Figure 3. In one or more embodiments, the height h1 of the base material front end area 1218 may be greater than the height h2 of the base material rear end area 1219. In one or more embodiments, the height h1 of the base material front end area 1218 may be less than the height h2 of the base material end area 1219.

In one or more embodiments, the base material front end area 1218 and/or its length may include a winding area of approximately 12 turns to approximately 22 turns in a longitudinal direction of the first electrode plate 121 from the winding front end 1216. If the base material front end area 1218 and/or its length is less than approximately 12 turns from the winding front end 1216, the base material tab 1214 may droop downward when the base material tab 1214 is compacted or bent, and, thus, the base material tab 1214 may be inserted into a space between the separators 123 and electrically short-circuited with the second electrode plate 122. If the base material front end area 1218 and/or its length is greater than approximately 22 turns from the winding front end 1216, an area of the base material tab 1214 may be reduced, and an electrical coupling area with the current collector plate 141 may be reduced, and, thus, electrical resistance between the base material tab 1214 and the current collector 141 may increase.

In one or more embodiments, the base material rear end area 1219 and/or its length may include a winding area of approximately 1 turns to approximately 4 turns in a longitudinal direction of the first electrode plate 121 from the winding rear end 1217. If the base material rear end area 1219 and/or its length is less than approximately one turn from the winding rear end 1217, it may be difficult to couple the electrode assembly 120 and the inner insulating member 1521 to each other. If the base material rear end area 1219 and/or its length is greater than approximately 4 turns from the winding rear end 1217, an area of the base material tab 1214 may be reduced, and an electrical coupling area with the current collector plate 141 may be reduced, and, thus, electrical resistance between the base material tab 1214 and the current collector 141 may increase.

As described above, the base material area 1213 may include a base material tab 1214 between the base material front end area 1218 and the base material end area 1219. The height h1 of the base material front end area 1218 and the height h2 of the base material end area 1219 may be less than a height h3 of the base material tab 1214. In one or more embodiments, the height h1 of the base material front end area 1218 may be approximately 1% to approximately 80% of the height h3 of the base material tab 1214. If the height h1 of the base material front end area 1218 is less than approximately 1%, the active material coating area 1212 may be damaged due to a manufacturing tolerance, and if the height h1 of the base material front end area 1218 is greater than approximately 80%, the base material tab 1214 may droop downward during the compacting or bending of the base material tab 1214 and then be inserted into the separators 123 so as to be electrically short-circuited with the second electrode plate 122.

In one or more embodiments, the height h2 of the base material end area 1219 may be approximately 1% to approximately 50% of the height h3 of the base material tab 1214. If the height h2 of the base material rear end area 1219 is less than approximately 1%, the active material coating area 1212 may be damaged due to the manufacturing tolerance, and if the height h2 of the base material rear end area 1219 is greater than approximately 50%, it may be difficult to couple the inner insulating member 1521 to the electrode assembly 120.

In one or more embodiments, the base material tab 1214 may be compacted or bent toward a core 124 of electrode assembly 120. In other embodiments, the compaction or bending direction may be a direction that is away from the core 124. In some embodiments, the base material tab 1214 compacted or bent in one direction may be easily laser-welded to the current collector plate 141.

In one or more embodiments, the base material tab 1214 may include a plurality of slits 1215 provided along the height direction of the base material tab 1214 to thereby provide a plurality of tabs. The slits 1215 may allow the compaction process or bending process of the base material tab 1214 to be easily performed. In one or more embodiments, each of the slits 1215 may be defined to be parallel or inclined to the height direction of the base material tab 1214. In one or more embodiments, heights of the plurality of slits 1215 from the winding front end 1216 to the winding rear end 1217 may be the same or different. In one or more embodiments, heights of the plurality of base material tabs 1214 separated by the plurality of slits 1215 may be the same or different. In one or more embodiments, widths of the plurality of base material tabs 1214 from the winding front end 1216 to the winding rear end 1217 may be the same or different.

As described above, each of the height h1 of the base material front end area 1218 and the height h2 of the base material end area 1219 may be less than the height h3 of the base material tab 1214. In some embodiments, a gap may exist between the base material front end area 1218 and the first current collector plate 141. In some embodiments, a gap may exist between the base material rear end area 1219 and the first current collector plate 141. In some embodiments, the base material tab 1214 may be welded to the first current collector plate 141, but the base material front end area 1218 or the base material end area 1219 may be spaced apart from the first current collector plate 141 and not be welded to the first current collector plate 141.

The first electrode plate 121 has been described, but in one or more embodiments, the shape of the second electrode plate 122 may also be similar to that of the first electrode plate 121. As described above, the second electrode plate 122 may include a second base material 1221, a second active material coating area 1222 provided by applying the second active material on the second base material 1221, and a second base material area 1223 that is exposed and extends without a coating of the second active material.

In some embodiments, the second electrode plate 122 may include a second winding front end at which winding of the second electrode plate 122 starts and a second winding rear end at which the winding of the second electrode plate 122 ends. In one or more embodiments, an area at which the winding of the second exposed and extending base material area 1223 of the second electrode plate 122 starts may be defined as a second base material front end area, and an area on which the winding of the second exposed and extending base material area 1223 of the second electrode plate 122 ends may be defined as a second base material rear end area. In one or more embodiments, a height in the height direction of the second base material front end area may be different from a height of the second base material rear end area. In one or more embodiments, a height of the second base material front end area may be greater than a height of the second base material rear end area. In one or more embodiments, a height of the second base material front end area may be less than a height of the second base material rear end area.

In one or more embodiments, the second base material front end area and/or its length may include a winding area of approximately 12 turns to approximately 22 turns in a longitudinal direction of the second electrode plate 122 from the second winding front end. In one or more embodiments, the second base material rear end area and/or its length may include a winding area of approximately 1 turn to approximately 4 turns in the longitudinal direction of the second electrode plate 122 from the second winding rear end.

As described above, the second base material area 1213 may include a second base material tab 1224 between the second base material front end area and the second base material rear end area, and each of a height of the second base material front end area and a height of the second base material rear end area may be less than a height of the second base material tab 1224. In one or more embodiments, the height of the second base material front end area may be approximately 1% to approximately 80% of the height of the second base material tab 1224. In one or more embodiments, the height of the second base material rear end area may be approximately 1% to approximately 50% of the height of the second base material tab 1224.

In one or more embodiments, the second base material tab 1224 may be compacted or bent toward a core 124 of electrode assembly 120. In other embodiments, the compaction or bending direction may be a direction that is away from the core 124. In some embodiments, the second base material tab 1224 compacted or bent in one direction may be easily laser-welded to the second current collector plate 142.

In one or more embodiments, the second base material tab 1224 may include a plurality of second slits provided along a height direction of the second base material tab 1224, thereby forming a plurality of second base material tabs 1224. The second slits may allow the compaction process or bending process of the second base material tabs to be easily performed. The second slits may share all of the characteristics of the above-described slits 1215. In some embodiments, the second base material tabs 1224 defined by the second slits may also share all of the characteristics of the first base material tabs 1214.

As described above, each of the height of the second base material front end area and the height of the base material rear end area may be less than the height of the second base material tab 1224. In some embodiments, a second gap may exist between the second base material front end area and the second current collector plate 142. In some embodiments, a second gap may exist between the second base material rear end area and the second current collector plate 142. In some embodiments, the second base material tab 1224 may be welded to the second current collector plate 142, but the second base material front end area or the second base material rear end area may be spaced apart from the second current collector plate 142 and not welded to the second current collector plate 142.

FIG. 4 illustrates a perspective view of a portion of the electrode assembly 120, to which the current collector plate is welded, and the insulating member 1521 is coupled, in the cylindrical secondary battery 100 according to embodiments.

As illustrated in FIG. 4, the first current collector plate 141 electrically connected to the first electrode plate 121 of the electrode assembly 120 and the upper and side portions of the electrode assembly 120 may be wrapped by the inner insulating member 1521. In one or more embodiments, the first current collector plate 141 may have a substantially circular plate shape and may include a plurality of welding beads 1411 provided by a laser beam. In one or more embodiments, the first current collector plate 141 may be electrically connected to the first base material tab(s) 1214 of the first electrode plate 121 by the welding beads 1411. In one or more embodiments, the inner insulating member 1521 may include an opening 1521c that exposes the first current collector plate 141. In one or more embodiments, the opening 1521c may have a diameter to expose most of the area of the first current collector plate 141. In other embodiments, the opening 1521c may have a diameter so as not to expose most of the area of the first current collector plate 141. As described above, the height of the base material rear end area 1219 of the first base area 1213 of the first electrode plate 121 may be relatively small, and thus, the insulating member 1521 may be easily disposed on an upper area 1521a of the electrode assembly 120. In one or more embodiments, the inner insulating member 1521 may include the upper area 1521a disposed on the upper side of the electrode assembly 120 and a sidewall area 1521b surrounding the outside of the electrode assembly 120. As described above, because the height of the base material rear end area 1219 is relatively less than the height of the base material tab(s) 1214, the sidewall area 1521b of the inner insulating member 1521 may be easily coupled to the outside of the electrode assembly 120.

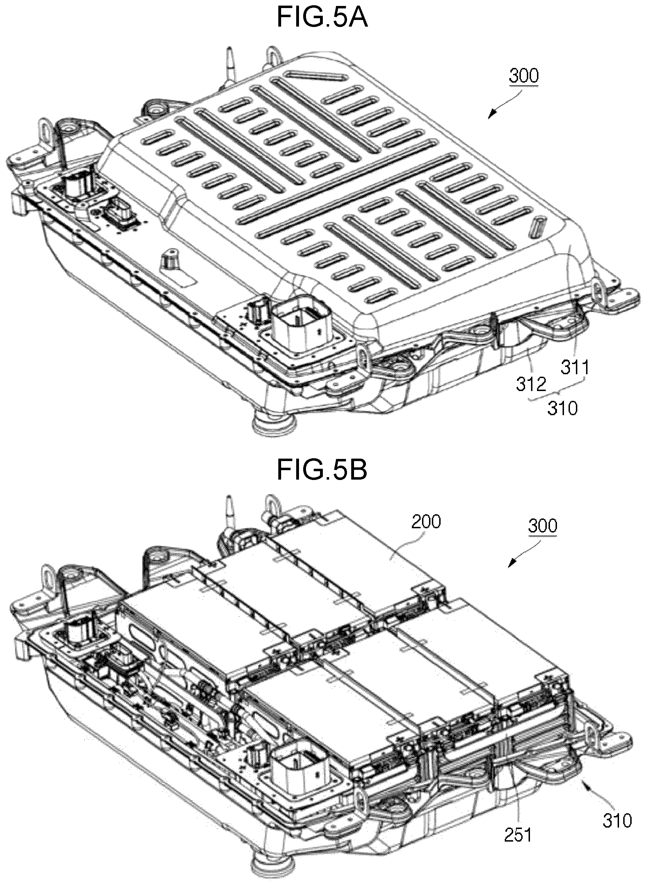

Referring to FIGS. 5A and 5B, the battery pack 300 may include a plurality of battery modules 200 and a housing 310 for accommodating the plurality of battery modules 200. For example, the housing 310 may include first and second housings 311 and 312 coupled in opposite directions through the plurality of battery modules 200. The plurality of battery modules 200 may be electrically connected to each other by using a bus bar 251, and the plurality of battery modules 200 may be electrically connected to each other in a series/parallel or series-parallel mixed method, thereby obtaining desired (e.g., required) electrical output. In the FIGS. 5A and 5B, for convenience of illustration, parts such as bus bars, cooling units, and external terminals for electrical connection of battery cells are omitted. In one or more embodiments, battery pack 300 may be mounted in a vehicle. The vehicle may be, for example, an electric vehicle, a hybrid vehicle, or a plug-in hybrid vehicle. The vehicle may include a four-wheeled vehicle or a two-wheeled vehicle.

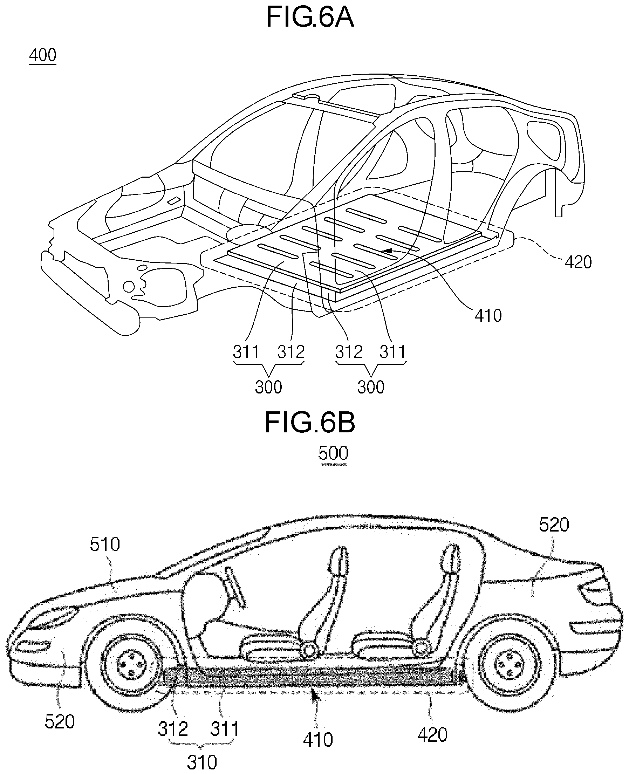

FIGS. 6A and 6B illustrate perspective and side views of vehicles 400 and 500 including the battery pack according to embodiments. In FIG. 6A, a battery pack 300 may include a battery pack cover 311 (may correspond to the first housing above), which is a part of a vehicle underbody 410, and a pack frame 312 (may correspond to the second housing above) disposed under the vehicle underbody 410. The pack frame 312 and the battery pack cover 311 may be integrally formed with a vehicle floor 420. The vehicle underbody 410 separates the inside and outside of a vehicle, and the pack frame 312 may be disposed outside the vehicle.

In FIG. 6B, a vehicle 500 may be formed by combining additional parts, such as a hood 510 in front of the vehicle and fenders 520 respectively located in the front and rear of the vehicle to a vehicle body parts 400. The vehicle 500 may further include a vehicle floor 420, which is one of the vehicle body parts 400 including the battery pack 300 including the pack frame 312 and the battery pack cover 311.

According to the embodiments, the secondary battery is provided that includes the front end area of the base material and the rear end area of the base material of the electrode assembly with different heights different prevents the base material area from drooping when compacted or bent. According to the embodiments, the secondary battery is provided in which the front end area or the rear end area of the electrode assembly has the height less than that of the base material area to prevent the base material area from drooping when compacted or bent the base material area. According to the embodiments, the secondary battery in which the rear end area of the base material of the electrode assembly has the height less than that of the base material area is such that the insulating member is easily coupled to the electrode assembly.

However, aspects and features of the present disclosure are not limited to those described above, and other aspects and features not mentioned will be clearly understood by a person skilled in the art from the detailed description, described below.

As described above, while the embodiments of the present disclosure have been described with reference to the specific embodiments, it will be apparent to those skilled in the art that various changes and modifications may be made without departing from the scope of the invention as defined in the following claims.

## Claims

1. A secondary battery (100) comprising:
a case (110); and
an electrode assembly (120) comprising a first electrode plate (121) and a second electrode plate (122) and accommodated in the case (110),
wherein the first electrode plate (121) comprises a base material (1211), the base material (1211) having a height direction from a first side (121A) of the base material (1211) to a second side (121B) of the base material (1211), an active material coating area (1212) coated with an active material on the base material (1211), an exposed base material area (1213) that is not coated with the active material, a winding front end (1216) at which winding of the first electrode plate (121) starts, and a winding rear end (1217) at which the winding of the first electrode plate (121) ends,
wherein a height (h1) in the height direction of a base material front end area (1218) at which the winding of the exposed base material area (1213) starts is different from a height (h2) in the height direction of a base material rear end area (1219) at which the winding ends.

2. The secondary battery (100) as recited in claim 1, wherein the base material front end area (1218) comprises an area of about 12 turns to about 22 turns from the winding front end (1216), and/or wherein the base material rear end area (1219) comprises an area of about (12) 1 turn to about (4) 4 turns from the winding rear end (1217).

3. The secondary battery (100) as recited in claim 1 or 2, wherein the base material area (1213) further comprises at least one base material tab (1214) disposed between the base material front end area (1218) and the base material rear end area (1219),
wherein each of the height (h1) of the base material front end area (1218) and the height (h2) of the base material rear end area (1219) is less than a height (h3) in the height direction of the at least one base material tab (1214).

4. The secondary battery (100) as recited in claim 3, wherein the height (h1) of the base material front end area (1218) is about 1% to about 80% of the height (h3) of the at least one base material tab (1214), and/or wherein the height (h2) of the base material rear end area (1219) is about 1% to about 50% of the height (h3) of the at least one base material tab (1214).

5. The secondary battery (100) as recited in claim 3 or 4, wherein the at least one base material tab (1214) is bent toward a core (124) or away from the core (124) of the electrode assembly (120).

6. The secondary battery (100) as recited in any one of claims 3 to 5, wherein the at least one base material tab (1214) comprises a plurality of slits (1215) provided in a height direction of the at least one base material tab (1214).

7. The secondary battery (100) as recited in any one of claims 3 to 6, further comprising a current collector plate (141) welded to the at least one base material tab (1214),
wherein a gap is provided between the base material front end area (1218) and/or the base material rear end area (1219) and the current collector plate (141).

8. The secondary battery (100) as recited in claim 7, further comprising a rivet terminal (150) welded to the current collector plate (141) and extending through the case (110).

9. The secondary battery (100) as recited in claim 8, further comprising a cap plate (130) configured to seal the case (110) at a side of the case (110) that is opposite to a side of the case (110) at which the rivet terminal (150) is positioned.

10. The secondary battery (100) as recited in any one of claims claim 7 to 9, further comprising an insulating member (1521) configured to wrap the current collector plate (141) and upper and side portions of the electrode assembly (120).

11. The secondary battery (100) as recited in claim 10, wherein the insulating member (1521) comprises an opening (1521c) through which the current collector plate (141) is exposed.

12. The secondary battery (100) as recited in any one of claims 1 to 11, wherein the second electrode plate (122) comprises a second base material (1221), a second active material coating area (1222) coated with an active material on the second base material (1221), and an exposed second base material area (1223) that is not coated with the active material, with the second electrode plate (122) being electrically connected to the case (110).

13. The secondary battery (100) as recited in claim 12, wherein a height in the height direction of a second base material front end area at which winding of the exposed second base material area (1223) starts is different from a height in the height direction of a second base material rear end area at which the winding ends.

14. The secondary battery (100) as recited in claim 12 or 13, wherein the second base material area (1223) further comprises at least one second base material tab (1224) disposed between the second base material front end area and the second base material rear end area,
wherein each of the height of the second base material front end area and the height of the second base material rear end area is less than a height in the height direction of the at least one second base material tab (1224).

15. The secondary battery (100) as recited in any one of claims 1 to 14, wherein the height of the base material front end area (1218) and/or the height of the second base material front end area is greater than the height of the base material rear end area (1219) and/or the height of the second base material rear end area, respectively.
